# EUROPÄISCHE PATENTSCHRIFT

(11) **EP 1 046 214 B1**
(45) Veröffentlichungstag und Bekanntmachung des Hinweises auf die Patenterteilung: **28.05.2008**
(21) Anmeldenummer: 99945894.6
(22) Anmeldetag: 03.07.1999
(51) Int. Cl.: H02K 5/24, H02K 1/17, H02K 23/04, H02K 15/03, H02K 5/04

(54) **DAUERMAGNETERREGTER KLEINMOTOR**
PERMANENT FIELD SMALL-SIZE MOTOR
MOTEUR DE FAIBLE PUISSANCE A EXCITATION PAR AIMANT PERMANENT

(30) Priorität: 02.10.1998 DE 19845370
(43) Veröffentlichungstag der Anmeldung: 25.10.2000
(73) Patentinhaber: ROBERT BOSCH GMBH, 70442 Stuttgart (DE)
(72) Erfinder: HARTZ, Guenter, D-77830 Bühlertal (DE)
(86) Internationale Anmeldenummer: PCT/DE1999/002053
(87) Internationale Veröffentlichungsnummer: WO 2000/021181

(56) Entgegenhaltungen:
- DE-A- 2 347 856
- DE-A- 4 327 217
- US-A- 4 296 343
- US-A- 5 412 267
- PATENT ABSTRACTS OF JAPAN vol. 1997, no. 7, 31. Juli 1997 (1997-07-31) & JP 09 070161 A (MATSUSHITA ELECTRIC IND CO), 11. März 1997 (1997-03-11)

## Beschreibung

Die Erfindung geht aus von einem dauermagneterregten Kleinmotor nach der Gattung des Anspruchs 1.

Die US 5,412,267 offenbart einen dauermagneterregten Kleinmotor mit einem um eine Drehachse drehbar gelagerten Anker, zumindest zwei den Anker an gegenüberliegenden Abschnitten umgebenden Permanentmagnetpolen und einem die Permanentmagnetpole verbindenden Polgehäuse, das zwei die Permanentmagnetpole umschließende gewölbte Bereiche aufweist und das im Bereich zwischen den Permanentmagnetpolen Abflachungen aufweist, wobei die Abflachungen des Polgehäuses an ihren Innenseiten zumindest abschnittsweise konvex nach außen gewölbt sind.

Die US 4,296,343 offenbart ebenfalls einen dauermagneterregten Kleinmotor mit einem um eine Drehachse drehbar gelagerten Anker, zumindest zwei den Anker an gegenüberliegenden Abschnitten umgebenden Permanentmagnetpolen und einem die Permanentmagnetpole verbindenden Polgehäuse, das zwei die Permanentmagnetpole umschließende gewölbte Bereiche aufweist und das im Bereich zwischen den Permanentmagnetpolen Abflachungen aufweist, wobei die Abflachungen des Polgehäuses zumindest abschnittsweise konvex nach außen gewölbt sind, wobei die Abflachungen des Polgehäuses jeweils den Permanentmagnetpolen benachbarte ebene Bereiche und jeweils einen zwischen den ebenen Bereichen angeordneten konvex nach außen gewölbten Bereich aufweisen.

Mit der DE 43 27 217 A1 ist ein weiterer Elektromotor bekannt geworden, bei dem ein Polgehäuse gewölbte Bereiche zur Aufnahme von Permanentmagneten aufweist, die jeweils durch Abflachungen miteinander verbunden sind, die abschnittsweise konvex nach außen gewölbt sind. Dabei weisen die Abflachungen eine stärkere Wölbung mit einem kleineren Krümmungsradius auf als die gewölbten Bereiche an den Permanentmagneten.

Ein dauermagneterregter Kleinmotor nach der Gattung des Anspruchs 1 ist aus der DE 84 28 487 U1 bekannt. Der in dieser Druckschrift beschriebene dauermagneterregte Kleinmotor dient beispielsweise als Antrieb für einen Kraftfahrzeug-Fensterheber. Er weist einen um eine Drehachse drehbar gelagerten Rotor auf, der einen Kommutator und einen aus einem Blechpaket zusammengesetzten Anker umfasst. Ferner sind zwei den Anker an gegenüberliegenden Abschnitten umgebende Permanentmagnetpole vorgesehen, die über ein den Anker und die Permanentmagnetpole ringförmig umschließendes Polgehäuse miteinander in Verbindung stehen, so dass der magnetische Rückfluss über das Polgehäuse geführt ist. Das Polgehäuse ist in ein aus Kunststoff bestehendes Motorgehäuse eingespritzt. In den Bereichen zwischen den Permanentmagnetpolen weist sowohl das Polgehäuse als auch das das Polgehäuse umgebende Kunststoff-Motorgehäuse jeweils Abflachungen auf, so dass das Polgehäuse und das Motorgehäuse Platz sparend ausgebildet sind und nur einen geringen Einbauraum beispielsweise in einer Fahrzeugtüre benötigen.

Bei dem bekannten dauermagneterregten Kleinmotor ist jedoch nachteilig, dass die Geräuschemission bei dem abgeflachten Polgehäuse im Vergleich zu einer vollständig runden Bauform erhöht ist. Ferner ist die Motorleistung und das von dem Kleinmotor erzeugte Drehmoment aufgrund des Ankerquerfeldes zwischen den abgeflachten Seitenbereichen reduziert.

### Vorteile der Erfindung

Der erfindungsgemäße dauermagneterregte Kleinmotor mit dem kennzeichnenden Merkmal des Anspruchs 1 hat demgegenüber den Vorteil, daß die Geräuschemission gegenüber dem aus dem Stand der Technik bekannten dauermagneterregten Kleinmotor mit vollständig ebenen Abflachungen des Polgehäuses deutlich reduziert ist. Da die Abflachungen des Polgehäuses erfindungsgemäß zumindest abschnittsweise konvex nach außen gewölbt sind, ergibt sich trotz der vorgesehenen Abflachungen eine gewisse Ausrundung des Polgehäuses. Dadurch ist einerseits die Schwingungsanregung im Bereich der Abflachungen des Polgehäuses reduziert, da sich ein größerer Abstand zwischen dem Polgehäuse und dem Anker einstellt und somit die schwingungsanregenden Kräfte vermindert sind. Andererseits ergibt sich auch eine verminderte Abstrahlung des Körperschalls des Polgehäuses aufgrund einer durch die Ausrundung hervorgerufenen Diffusor-Wirkung.

Gleichzeitig wird aufgrund des vergrößerten Abstandes zwischen dem Anker und den Abflachungen des Polgehäuses das Ankerquerfeld vermindert, das sich senkrecht zu der Verbindungsachse zwischen den beiden Permanentmagnetpolen erstreckt und die beiden Abflachungen über den Anker miteinander verbindet. Die Verringerung des Ankerquerfeldes führt zu einem erhöhten Drehmoment des dauermagneterregten Kleinmotors und somit zu einer höheren Motorleistung.

Trotz der erfindungsgemäß konvex nach außen gerichteten Auswölbung der Abflachung des Polgehäuses benötigt das Polgehäuse einen relativ geringen Einbauraum, der gegenüber einen ebenen Ausbildung der Abflachungen allenfalls geringfügig erhöht und gegenüber einer vollständig runden Bauform des Polgehäuses noch deutlich reduziert ist. Der erfindungsgemäße Kleinmotor kann daher platzsparend beispielsweise in Kraftfahrzeugen eingebaut werden.

Durch die in den Unteransprüchen aufgeführten Maßnahmen sind vorteilhafte Weiterbildungen und Verbesserungen des im Anspruch 1 angegebenen dauermagneterregten Kleinmotors möglich.

Die Abflachungen können entweder vollständig oder nur abschnittsweise konvex nach außen gewölbt sein. Im letzeren Fall können den Permanentmagnetpolen benachbarte ebene Bereiche und zwischen den ebenen Bereichen angeordnete konvex nach außen gewölbte Bereiche vorgesehen sein.

Wenn die konvexe Wölbung so geformt ist, daß der radiale Abstand zwischen den Abflachungen und dem Anker deutlich größer ist als der radiale Abstand zwischen den Permanentmagnetpolen und dem Anker, wird das Ankerquerfeld gegenüber dem Ankerhauptfeld deutlich reduziert.

### Zeichnung

Ausführungsbeispiele der Erfindung sind in der Zeichnung vereinfacht dargestellt und in der nachfolgenden Beschreibung näher erläutert. Es zeigen:
- Fig. 1A: einen Kleinmotor in einer teilweise geschnittenen Längsdarstellung;
- Fig. 1B: den in Fig. 1A dargestellten dauermagneterregten Kleinmotor in einer teilweise geschnittenen Querdarstellung;
- Fig. 2A: ein Ausführungsbeispiel eines erfindungsgemäßen dauermagneterregten Kleinmotors in einer teilweise geschnittenen Längsdarstellung;
- Fig. 2B: den in Fig. 2A dargestellten dauermagneterregten Kleinmotor in einer teilweise geschnittenen Querdarstellung und
- Fig. 3: eine vergrößerte und detailliertere Darstellung des in den Fig. 2A und 2B dargestellten Kleinmotors in einer teilweise geschnittenen Querdarstellung.

### Beschreibung der Ausführungsbeispiele

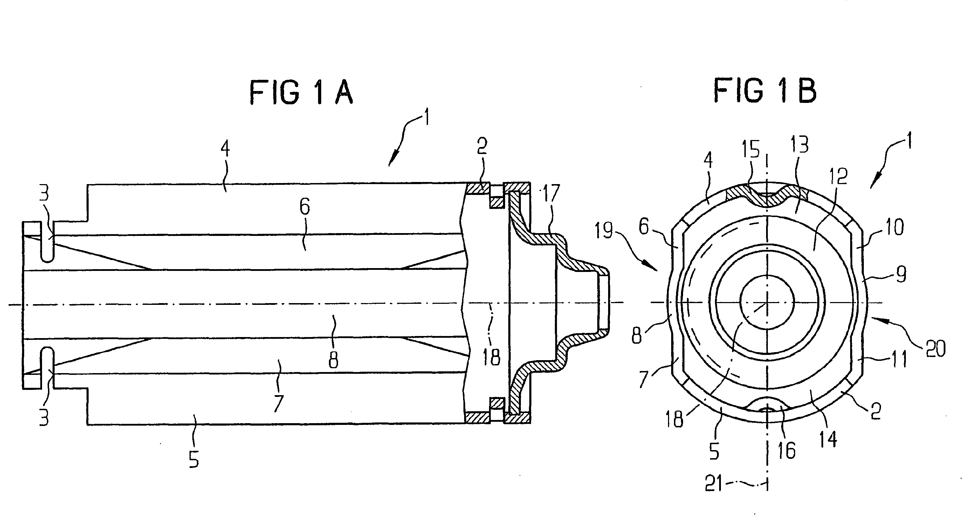

In Fig. 1A ist in einer teilweise geschnittenen Längsdarstellung ein dauermagneterregte Kleinmotor gezeigt. Der mit dem Bezugszeichen 1 bezeichnete dauermagneterregte Kleinmotor kann insbesondere im Kraftfahrzeugbereich in vielfältiger Weise als Antriebsmotor eingesetzt werden, beispielsweise als Antrieb für einen Kraftfahrzeug-Fensterheber. In Fig. 1A ist das als Motorgehäuse dienende Polgehäuse 2 erkennbar, das teilweise geschnitten dargestellt ist. Das Polgehäuse 2 ist mittels Montagelängslöcher 3 beispielsweise an einem Kraftfahrzeug montierbar.

Das Polgehäuse 2 weist einen einen aus Fig. 1A nicht erkennbaren ersten Magnetpol umschließenden ersten gewölbten Bereich 4, einen einen aus Fig. 1A ebenfalls nicht erkennbaren zweiten Permanentmagnetpol umschließenden zweiten gewölbten Bereich 5, einen sich an den ersten gewölbten Bereich 4 anschließenden ersten ebenen Bereich 6, einen sich an dem zweiten gewölbten Bereich 5 anschließenden zweiten ebenen Bereich 7 sowie einem zwischen den ebenen Bereichen 6 und 7 angeordneten 3 konvex nach außen gewölbten Bereich 8 auf. Wie aus Fig. 1B, die eine teilweise geschnittene Querdarstellung des in Fig. 1A gezeigten Kleinmotors zeigt, erkennbar, befindet sich dem dritten konvex nach außen gewölbten Bereich 8 gegenüberliegend ein vierter konvex nach außen gewölbter Bereich 9, der zwischen einem dritten ebenen Bereich 10 und einem vierten ebenen Bereich 11 angeordnet ist. Der dritte ebene Bereich 10 schließt sich dem ersten ebenen Bereich 6 gegenüberliegend an den ersten gewölbten Bereich 7 an, während sich der vierte ebene Bereich dem zweiten ebenen Bereich 7 gegenüberliegend an den zweiten gewölbten Bereich 5 anschließt. Die beschriebenen Bereiche 4 bis 11 des Polgehäuses 2 sind Bereiche eines insgesamt einstückig ausgebildeten Polgehäuses 2, das ringförmig einen Anker 12 und in den Fig. 1A und 1B nicht dargestellte Permanentmagnetpole umschließt. Die Permanentmagnetpole sind in mit den Bezugszeichen 13 und 14 bezeichnete Einbauräume einbaubar. Nach innen ragende Einstemmungen 15 und 16 dienen der axialen Arretierung der Permanentmagnetpole.

Der Anker 12 ist über ein Lagerschild 17, das gleichzeitig einen deckelartigen Verschluß des Polgehäuses 2 bildet, an dem Polgehäuse 2 um eine Drehachse 18 drehbar gelagert. An dem dem Lagerschild 17 gegenüberliegenden Ende des Polgehäuses 2 ist eine weitere Lagerung für den Anker 12 vorgesehen. Der Anker 12 ist üblicherweise aus einem Blechpaket zusammengesetzt und weist mehrere Ankerwicklungen auf, die über einen nicht dargestellten Kommutator mit elektrischen Versorgungsleitungen verbunden sind.

Das Polgehäuse 4 weist zwei Abflachungen 19 und 20 im Bereich zwischen den in die Einbauräume 13 und 14 eingebauten Permanentmagnetpolen auf, wobei diese Abflachungen konvex nach außen gewölbt sind. Bei dem in den Fig. 1A und 1B dargestellten Kleinmotor sind die Abflachungen 19 und 20 nur abschnittsweise im Bereich des dritten und vierten gewölbten Bereichs 8 und 9 konvex nach außen gewölbt, während die übrigen Bereiche 6, 7, 10 und 11 der Abflachungen 19 und 20 eben ausgebildet sind und parallel zu der Verbindungsachse 21 der Permanentmagnetpole verlaufen.

Die Abflachungen 19 und 20 verringern gegenüber einer vollständig runden Ausbildung des Polgehäuses 2 den benötigten Einbauraum und tragen somit zu einer platzsparenden Ausgestaltung des dauermagneterregten. Kleinmotors 1 bei. Der Einbauraum ist gegenüber der aus dem Stand der Technik bekannten Ausgestaltung, bei welcher die Abflachungen 19 und 20 vollständig eben ausgebildet sind, sogar noch weiter verringert, da die ebenen Bereiche 6, 7, 10 und 11 weiter innen liegend angeordnet werden können. Wesentlicher ist jedoch die verringerte Geräuschemission, da der abgestrahlte Körperschall des Polgehäuses 2 aufgrund der Abrundung durch die gewölbten Bereiche 8 und 9 und die damit verbundene Diffusor-Wirkung deutlich reduziert ist. Ferner führt der vergrößerte Abstand zwischen dem Polgehäuse 2 und dem Anker 12 im Bereich der Abflachungen 19 und 20 zu einem erhöhten Drehmoment und somit zu einer erhöhten Motorleistung des dauermagneterregten Kleinmotors 1, worauf noch näher eingegangen wird.

Bei dem in Fig. 1A und 1B dargestellten Kleinmotor fällt der Krümmungsmittelpunkt sowohl des ersten und zweiten gewölbten Bereichs 4 und 5 als auch des dritten und vierten gewölbten Bereichs 8 und 9 mit der Drehachse 18 des Ankers 12 zusammen. Die gewölbten Bereiche 8 und 9 sind daher an den Radius des Ankers 12 angepaßt.

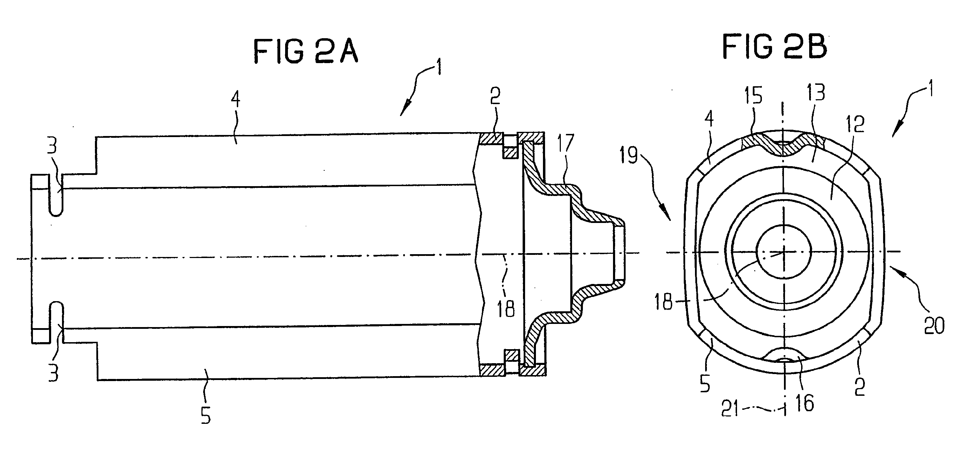

Fig. 2A zeigt ein Ausführungsbeispiel des erfindungsgemäßen dauermagneterregten Kleinmotors 1 in einer teilweise geschnittenen Längsdarstellung, während Fig. 2B das in Fig. 2A gezeigte zweite Ausführungsbeispiel in einer teilweise geschnittenen Querdarstellung zeigt. Bereits beschriebene Elemente sind mit übereinstimmenden Bezugszeichen versehen, so daß sich insoweit eine wiederholende Beschreibung erübrigt.

Der Unterschied des in den Fig. 2A und 2B gezeigten Ausführungsbeispiels gegenüber dem in den Fig. 1A und 1B gezeigten Kleinmotors besteht darin, daß die Abflachungen 19 und 20 nicht nur an den gewölbten Bereichen 8 und 9 abschnittsweise konvex nach außen gewölbt sind, sondern daß die Abflachungen 19 und 20 insgesamt konvex nach außen gewölbt sind. Dabei ist der Krümmungsradius, mit welchem die Abflachungen 19 und 20 bei dem Ausführungsbeispiel konvex nach außen gewölbt sind im Vergleich zu dem Krümmungsradius der gewölbten Bereiche 8 und 9 des ersten Kleinmotors deutlich größer.

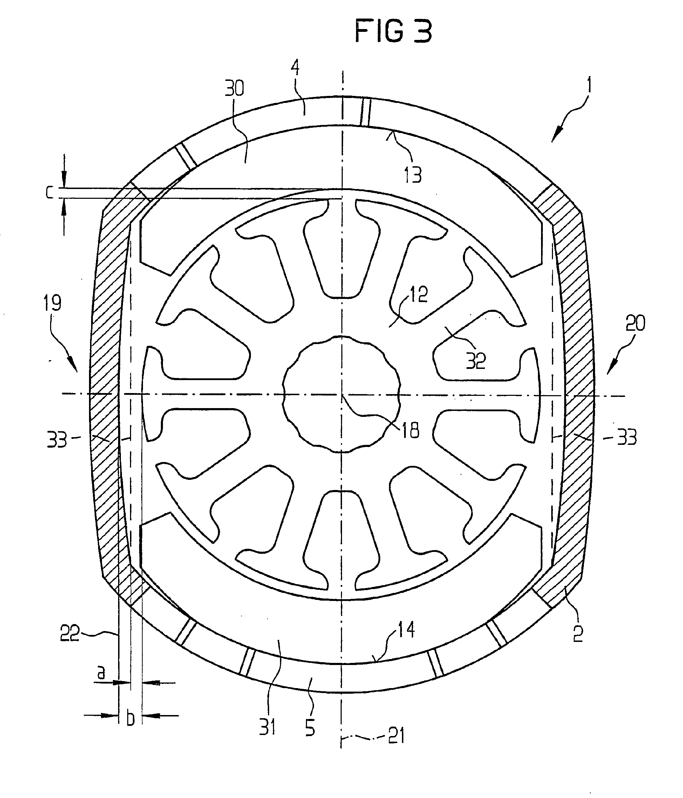

Zum besseren Verständnis der Erfindung ist in Fig. 3 in einer teilweise geschnittenen Querdarstellung der dauermagneterregte Kleinmotor 1 entsprechend dem in den Fig. 2A und 2B dargestellten Ausführungsbeispiel nochmals vergrößert und detaillierter wiedergegeben. Auch hier sind bereits beschriebene Elemente mit übereinstimmenden Bezugszeichen versehen und werden daher nicht nochmals beschrieben.

In Fig. 3 sind die in die Einbauräume 13 und 14 eingebauten Permanentmagnetpole 30 und 31 eingezeichnet. Ferner ist der Anker 12 detaillierter dargestellt, wobei erkennbar ist, daß der Anker 12 mehrere sich im wesentlichen radial erstreckende Stege 32 aufweist, die jeweils mit einer in Fig. 3 nicht dargestellten Ankerwicklung bewickelt sind.

Zum Vergleich ist in Fig. 3 mit einer unterbrochenen Linie 33 der Verlauf der Innenkante der entsprechend dem Stand der Technik eben ausgebildeten Abflachungen 19 und 20 dargestellt. Wenn die Abflachungen 19 und 20, wie beim Stand der Technik, eben ausgebildet sind, ergibt sich ein Abstand a zwischen der Innenkante der Abflachungen 19 und 20 und dem Anker 12. Wenn die Abflachungen 19 und 20 hingegen, wie erfindungsgemäß vorgeschlagen, nicht eben, sondern konvex nach außen gewölbt ausgebildet sind, ergibt sich ein deutlich vergrößerter Abstand b zwischen der Innenkante der Abflachungen 19 und 20 und dem Anker 12.

Das senkrecht zu der Verbindungsachse 21, d. h. senkrecht zur Längserstreckung des magnetischen Ankerhauptfeldes, verlaufende magnetische Ankerquerfeld hängt wesentlich von dem Abstand zwischen den Abflachungen 19 und 20 des Polgehäuses 2 und dem Anker 12 ab. Durch Vergrößern dieses Abstands kann daher das Ankerquerfeld reduziert werden, wodurch das Drehmoment des erfindungsgemäßen dauermagneterregten Kleinmotors 1 und somit die Motorleistung erhöht wird. Neben der bereits beschriebenen deutlich verminderten Geräuschabstrahlung ergibt sich daher als weiterer Vorteil der erfindungsgemäßen Ausgestaltung eine Erhöhung des Drehmoments und der Motorleistung.

Die Geräuschreduzierung ergibt sich einerseits dadurch, daß die Schwingungsanregung der Abflachungen 19 und 20 des Motorgehäuses 2 aufgrund des vergrößerten Abstandes b von dem Anker 12 verringert ist. Andererseits wird auch die Abstrahlung des Körperschalls von dem Polgehäuse 2 dadurch reduziert, daß sich aufgrund der Auswölbung der Abflachungen 19 und 20 und somit der Ausrundung des Polgehäuses 2 eine Diffusor-Wirkung ergibt, die die Geräuschabstrahlung vermindert.

## Patentansprüche

1. Dauermagneterregter Kleinmotor (1) mit einem um eine Drehachse (18) drehbar gelagerten Anker (12), zumindest zwei den Anker (12) an gegenüberliegenden Abschnitten umgebenden Permanentmagnetpolen (30, 31) und einem die Permanentmagnetpole (30,31) verbindenden Polgehäuse (2), das zwei die Permanentmagnetpole (30, 31) umschließende gewölbte Bereiche (4, 5) aufweist und das im Bereich zwischen den Permanentmagnetpolen (30, 31) Abflachungen (19, 20) aufweist, wobei die Abflachungen (19, 20) des Polgehäuses (2) zumindest abschnittsweise konvex nach außen gewölbt sind, und einen geringeren Abstand zur Drehochse haben als die gewölbten Bereiche **dadurch gekennzeichnet, dass** die Abflachungen (19, 20) weniger gewölbt sind als die gewölbten Bereiche (4, 5).

2. Dauermagneterregter Kleinmotor nach Anspruch 1,
**dadurch gekennzeichnet,**
**daß** die Abflachungen (19, 20) des Polgehäuses (2) vollständig konvex nach außen gewölbt sind.

3. Dauermagneterregter Kleinmotor nach einem der Ansprüche 1 bis 2,
**dadurch gekennzeichnet,**
**daß** der radiale Abstand (b) zwischen den gewölbten Bereichen der Abflachungen (19, 20) und dem Anker (12) größer ist als der radiale Abstand (c) zwischen den Permanentmagnetpolen (20, 31) und dem Anker (12).

4. Dauermagneterregter Kleinmotor nach einem der Ansprüche 1 bis 3,
**dadurch gekennzeichnet,**
**daß** das Polgehäuse (2) den Anker (12) und die Permanentmagnetpole (30, 31) ringförmig, einteilig umschließt.

5. Dauermagneterregter Kleinmotor nach einem der Ansprüche 1 bis 4,
**dadurch gekennzeichnet,**
**daß** der radiale Abstand (b) zwischen einer Tangentialebene (22) an den gewölbten Bereichen der Abflachungen (19, 20) und dem Anker (12) größer ist als der radiale Abstand (a) einer Ebene (33) durch die Enden der Abflachungen (19, 20) und dem Anker (12).

## Claims

1. Small motor (1) with permanent-magnet excitation, having an armature (12) which is mounted such that it can rotate about a rotation axis (18), at least two permanent-magnet poles (30, 31) which surround the armature (12) at opposite sections, and a pole housing (2) which connects the permanent-magnet poles (30, 31), has two curved regions (4, 5) which surround the permanent-magnet poles (30, 31), and has flattened portions (19, 20) in the region between the permanent-magnet poles (30, 31), with at least sections of the flattened portions (19, 20) of the pole housing (2) being curved convexly to the outside and being at a smaller distance from the rotation axis than the curved regions, **characterized in that** the flattened portions (19, 20) have a less prominent curvature than the curved regions (4, 5).

2. Small motor with permanent-magnet excitation according to Claim 1, **characterized in that** the flattened portions (19, 20) of the pole housing (2) are completely curved convexly to the outside.

3. Small motor with permanent-magnet excitation according to either of Claims 1 and 2, **characterized in that** the radial distance (b) between the-curved regions of the flattened portions (19, 20) and the armature (12) is greater than the radial distance (c) between the permanent-magnet poles (30, 31) and the armature (12).

4. Small motor with permanent-magnet excitation according to one of Claims 1 to 3, **characterized in that** the pole housing (2) surrounds the armature (12) and the permanent-magnet poles (30, 31) in an annular and integral manner.

5. Small motor with permanent-magnet excitation according to one of Claims 1 to 4, **characterized in that** the radial distance (b) between a tangential plane (22) to the curved regions of the flattened portions (19, 20) and the armature (12) is greater than the radial distance (a) between a plane (33) through the ends of the flattened portions (19, 20) and the armature (12).

## Revendications

1. Petit moteur (1) à excitation par aimant permanent comportant un induit (12) monté à rotation autour d'un axe de rotation (18), ayant au moins deux pôles d'aimant permanent (30, 31) entourant des segments opposés de l'induit (12) ainsi qu'un boîtier polaire (2) reliant les pôles d'aimant permanent (30, 31), le boîtier ayant deux régions bombées (4, 5) entourant les pôles d'aimant permanent (30, 31) et des à-plats (19, 20) dans la région entre les pôles d'aimant permanent (30, 31), les à-plats (19, 20) du boîtier polaire (2) étant bombés de façon convexe vers l'extérieur, au moins par segments, et ils sont à une distance de l'axe de rotation plus faible que les régions bombées,
**caractérisé en ce que**
les à-plats (19, 20) sont moins bombés que les régions bombées (4, 5).

2. Petit moteur à excitation par aimant permanent selon la revendication 1,
**caractérisé en ce que**
les à-plats (19, 20) du boîtier polaire (2) sont bombés vers l'extérieur d'une manière complètement convexe.

3. Petit moteur à excitation par aimant permanent selon l'une des revendications 1 à 2,
**caractérisé en ce que**
la distance radiale (b) entre les régions bombées des à-plats (19, 20) et l'induit (12) est supérieure à la distance radiale (c) entre les pôles d'aimant permanent (30, 31) et l'induit (12).

4. Petit moteur à excitation par aimant permanent selon l'une des revendications 1 à 3,
**caractérisé en ce que**
le boîtier polaire (2) entoure en une seule pièce l'induit (12) et les pôles d'aimant permanent (30, 31) sous une forme annulaire.

5. Petit moteur à excitation par aimant permanent selon l'une des revendications 1 à 4,
**caractérisé en ce que**
la distance radiale (b) entre un plan tangentiel (22) des régions bombées des à-plats (19, 20) et l'induit (12) est supérieure à la distance radiale (a) d'un plan (33) passant par les extrémités des à-plats (19, 20) et l'induit (12).
